# EUROPEAN PATENT APPLICATION

(11) **EP 4 644 472 A1**
(43) Date of publication of application: **05.11.2025**
(21) Application number: 23912138.7
(22) Date of filing: 26.12.2023
(51) Int. Cl.: C08J 11/08, C08G 64/40

(54) **METHOD FOR PRODUCING RECLAIMED POLYCARBONATE RESIN**

(30) Priority: 26.12.2022 JP 2022208423; 26.12.2022 JP 2022208422
(71) Applicant: Mitsubishi Chemical Corporation, Tokyo 100-8251 (JP)
(72) Inventor: YOKOGI, Masashi, Tokyo 100-8251 (JP); NAKAMURA, Makoto, Tokyo 100-8251 (JP); SHIBATA, Hiroki, Tokyo 100-8251 (JP)
(74) Representative: Vossius & Partner Patentanwälte Rechtsanwälte mbB
(86) International application number: PCT/JP2023/046662
(87) International publication number: WO 2024/143359

(57) **Abstract**

Provided is a production method capable of producing a recycled polycarbonate resin having a good color tone and good mechanical properties. The method for producing a recycled polycarbonate resin according to the present invention includes step (S1) of preparing a polycarbonate resin solution by dissolving the polycarbonate resin waste raw material in a good solvent, step (S2) of bringing the polycarbonate resin solution into contact with an agglomerating agent, and subsequently removing undissolved substances to prepare a solution (L) free of undissolved substances, step (S3) of precipitating the recycled polycarbonate resin by mixing the solution (L) with a poor solvent, and step (S4) of recovering the precipitated recycled polycarbonate resin.

## Description

### Technical Field

The present invention relates to a method for producing a recycled polycarbonate resin.

### Background Art

Polycarbonate resins are excellent in mechanical properties such as heat resistance and impact resistance, dimensional stability, and transparency. Polycarbonate resin compositions containing a polycarbonate resin are used for various purposes.

However, a polycarbonate resin waste composition is degraded with use and by ultraviolet rays, and can be deteriorated in color tone and mechanical properties. Polycarbonate resin compositions often contain, in addition to a polycarbonate resin, additives, inorganic substances and other polymers, and these components are difficult to separate. For this reason, the recycling use of polycarbonate resin waste compositions is limited, and most of them are disposable.

For sustainable development, it is important to recycle polycarbonate resins and cycle the resource. Approaches for recycling a polycarbonate resin are roughly divided into three methods: material recycling in which a polycarbonate resin is recycled, chemical recycling in which bisphenol as a raw material for a polycarbonate resin is recycled, and thermal recycling in which use is made as source of energy. Patent Literature 1 discloses decomposition of a polycarbonate resin into bisphenol A as a raw material. Patent Literature 2 discloses a method in which a polycarbonate resin is dissolved in a solvent, insoluble substances are removed, and the polycarbonate resin is then precipitated by addition of an organic solvent. Patent Literature 3 discloses a technique in which as in Patent Literature 2, a polycarbonate is dissolved in a solvent, and then precipitated.

### Citation List

### Patent Literature

Patent Literature 1: Japanese Patent Laid-Open No. 2022-75133
Patent Literature 2: Japanese Patent Laid-Open No. 1999-152371
Patent Literature 3: Japanese Patent Laid-Open No. 2004-182746

### Summary of Invention

### Technical Problem

The method disclosed in Patent Literature 1 relates to chemical recycling in which a polycarbonate resin is decomposed into bisphenol as a raw material, where the burden accompanying decomposition and purification is heavier than that in material recycling.

The methods disclosed in Patent Literatures 2 and 3 relate to material recycling, and can be said to be simpler as compared to chemical recycling. On the other hand, in the material recycling, the color tone and the mechanical properties of the recycled polycarbonate resin may be insufficient for practical use because additives and degraded components are difficult to separate. As described above, polycarbonate resins are widely used in applications where mechanical properties and transparency are required. For use in these applications, recycled polycarbonate resins obtained by material recycling are required to have a good color tone and good mechanical properties. However, Patent Literatures 2 and 3 describe little about the physical properties of the recycled polycarbonate resin.

The present invention has been made in view of these circumstances, and an object of the present invention is to provide a production method capable of producing a recycled polycarbonate resin having a good color tone and good mechanical properties.

### Solution to Problem

The present inventors have intensively conducted studies for solving the above-described problems, and resultantly found that the following inventions meet the above-described object, leading to the present invention. That is, the present invention relates to the following inventions.
<1> A method for producing a recycled polycarbonate resin in which a recycled polycarbonate resin is produced from a polycarbonate resin waste raw material, the method comprising the following steps (S1) to (S4):
   step (S1): preparing a polycarbonate resin solution by dissolving the polycarbonate resin waste raw material in a good solvent in which the polycarbonate resin waste raw material is soluble;
   step (S2): bringing the polycarbonate resin solution into contact with an agglomerating agent, and subsequently removing undissolved substances to prepare a solution (L) free of undissolved substances;
   step (S3): precipitating the recycled polycarbonate resin by mixing the solution (L) with a poor solvent; and
   step (S4): recovering the precipitated recycled polycarbonate resin.
<2> The method for producing a recycled polycarbonate resin according to <1>, comprising, before removal of undissolved substances in step (S2), a step of bringing the polycarbonate resin solution into contact with a filter aid.
<3> The method for producing a recycled polycarbonate resin according to <1> or <2>, wherein the polycarbonate resin waste raw material contains 5% by mass or more in total of polycarbonate resin compositions corresponding to one or more selected from the group consisting of the following (i) to (iii), and the polycarbonate resin waste raw material contains 10% by mass or more of a polycarbonate resin:
   (i) a polycarbonate resin composition which has a transmittance of 90% or less at 500 nm when the transmittance is measured using a 50 mm cell with respect to a solution obtained by dissolving the polycarbonate resin composition in methylene chloride to be 10% by mass;
   (ii) a polycarbonate resin composition having a nitrogen atom content of 50 ppm by mass or more; and
   (iii) a polycarbonate resin composition having a phosphorus atom content of 5 ppm by mass or more.
<4> The method for producing a recycled polycarbonate resin according to any one of <1> to <3>, wherein the good solvent used in step (S1) contains a halogen-based solvent and/or a phenol-based solvent.
<5> The method for producing a recycled polycarbonate resin according to any one of <1> to <4>, wherein the poor solvent used in step (S3) contains any one selected from the group consisting of a ketone-based solvent, a saturated hydrocarbon-based solvent, an alcohol-based solvent and water.
<6> The method for producing a recycled polycarbonate resin according to any one of <1> to <5>, wherein the agglomerating agent in step (S2) is one or more selected from the group consisting of iron (III) chloride, iron (I) sulfate, iron (II) sulfate, aluminum chloride, aluminum sulfate, titanium oxide, copper (I) sulfate, copper (II) sulfate, copper (I) chloride, copper (II) chloride, zinc sulfate, an anionic polymer compound, a cationic polymer compound and a nonionic polymer compound.
<7> The method for producing a recycled polycarbonate resin according to <6>, wherein the agglomerating agent in step (S2) is one or more selected from the group consisting of iron (III) chloride, iron (II) sulfate, iron (III) sulfate, aluminum sulfate, aluminum chloride, polyacrylamide and polyethylene oxide.
<8> The method for producing a recycled polycarbonate resin according to <2>, wherein the filter aid is one or more selected from the group consisting of activated carbon, montmorillonite, celite, silica gel and a synthetic adsorbent.
<9> The method for producing a recycled polycarbonate resin according to any one of <1> to <8>, wherein a total content of Na, Mg and Al in the recycled polycarbonate resin is 0.3 ppm by mass or more and 20 ppm by mass or less (preferably 0.3 ppm by mass or more and 15 ppm by mass or less, more preferably 0.5 ppm by mass or more and 12 ppm by mass or less, further more preferably 1.0 ppm by mass or more and 10 ppm by mass or less).
<10> The method for producing a recycled polycarbonate resin according to any one of <1> to <9>, wherein an L value of the recycled polycarbonate resin is 80 or more as measured by reflectometry.
<11> The method for producing a recycled polycarbonate resin according to any one of <1> to <10>, wherein a nominal tensile strain of the recycled polycarbonate resin is 60% or more.

<XI> A method for producing a molded article, comprising the steps of: preparing a recycled polycarbonate resin by the method for producing a recycled polycarbonate resin according to any one of <1> to <11>; and preparing a molded article using the recycled polycarbonate resin.

### Advantageous Effects of Invention

According to the present invention, it is possible to produce a recycled polycarbonate resin having a good color tone and good mechanical properties.

### Description of Embodiments

Hereinafter, embodiments of the present invention will be described in detail, but the description of constitutional requirements below gives an example (representative example) of embodiments of the present invention, and the present invention is not limited to the following as long as the spirit of the present invention is not changed. The term "to" pertaining to a range as used herein should be construed as including the numerical values or property values before and after the term.

The term "ppm", when simply written by itself, means "ppm by mass".

### <Method for producing recycled polycarbonate resin>

The present invention relates to a method for producing a recycled polycarbonate resin in which a recycled polycarbonate resin is produced from a polycarbonate resin waste raw material, the method comprising the following steps (S1) to (S4) (hereinafter, sometimes referred to as "the inventive production method").

Step (S1): preparing a polycarbonate resin solution by dissolving the polycarbonate resin waste composition in a good solvent in which the polycarbonate resin waste composition is soluble

Step (S2): bringing the polycarbonate resin solution into contact with an agglomerating agent, and subsequently removing undissolved substances to prepare a solution (L) free of undissolved substances.

Step (S3): precipitating the recycled polycarbonate resin by mixing the solution (L) with a poor solvent.

Step (S4): recovering the precipitated recycled polycarbonate resin.

The inventive production method is to produce a recycled polycarbonate resin by material recycling. That is, in the inventive production method, a polycarbonate resin waste raw material as a raw material is not chemically decomposed, and recycled as a polycarbonate resin again after removal of degraded products and the like of the polycarbonate resin.

One of characteristics of the inventive production method is that a polycarbonate resin solution is brought into contacted with an agglomerating agent, and impurities are then removed, followed by generation of a precipitate. By using this method, impurities can be removed by adsorption and aggregation, so that it is possible to produce a recycled polycarbonate resin that exhibits color tone acceptable for practical use although a polycarbonate resin waste raw material which has an effect on the color tone is used. It is also possible to obtain a polycarbonate resin having good weather resistance and mechanical properties. The inventive production method ensures that even when a raw material containing components other than a polycarbonate resin, such as other resins and additives, is used, the other components can be efficiently removed to obtain a recycled polycarbonate resin whose color tone and the like are acceptable for practical use.

Hereinafter, the steps will be described.

### [Step (S1)]

Step (S1) is a step of preparing a polycarbonate resin solution by dissolving a polycarbonate resin waste raw material in a good solvent.

### [Polycarbonate resin waste raw material]

The polycarbonate resin waste raw material is a post-consumer material and/or a pre-consumer material of a polycarbonate resin composition. The polycarbonate resin waste raw material contains 5% by mass or more in total of polycarbonate resin compositions corresponding to one or more selected from the group consisting of the following (i) to (iii).
(i) A polycarbonate resin composition which has a transmittance of 90% or less at 500 nm when the transmittance is measured using a 50 mm cell with respect to a solution obtained by dissolving the polycarbonate resin composition in methylene chloride to be 10% by mass
(ii) A polycarbonate resin composition having a nitrogen atom content of 50 ppm by mass or more.
(iii) A polycarbonate resin composition having a phosphorus atom content of 5 ppm by mass or more.

Representative examples of the polycarbonate resin composition that meets (i) above include polycarbonate resins to which a dye, a pigment, carbon black, titanium oxide and the like are added. Compounds such as a dye, a pigment and carbon black are very difficult to remove in conventional material recycling, and from such a polycarbonate resin composition, a polycarbonate resin having a good color tone is not easily recycled.

Representative examples of the polycarbonate resin composition that meets (ii) above include polycarbonate resins to which a compound that contains a nitrogen atom and is used as an ultraviolet absorber or the like is added. The use of such a polycarbonate resin composition for many years leads to degradation of the compound containing a nitrogen atom, which causes coloration of the polycarbonate resin composition. In conventional material recycling, the compound that causes this coloration is difficult to remove, remains in the recycled polycarbonate resin, and resultantly causes coloration.

Representative examples of the polycarbonate resin composition that meets (iii) above include polycarbonate resins to which a compound that contains a phosphorus atom and is used as a phosphorus-based flame retardant or the like is added. The use of such a polycarbonate resin composition for many years is presumed to lead to erosion of the resin through hydrolysis by the compound containing a phosphorus atom, which causes deterioration of the mechanical strength of the resin. In conventional material recycling, such a flame retardant is difficult to remove, and may be a factor that deteriorates the mechanical strength of the recycled polycarbonate resin.

Thus, additives added for improving the characteristics of a polycarbonate resin, such as a pigment, a dye, an ultraviolet absorber and a flame retardant, are preferably removed from the viewpoint of color tone and mechanical strength when the polycarbonate resin is recycled from a polycarbonate resin composition. The inventive production method enables removal of these impurities.

In particular, if the polycarbonate resin waste raw material contains 5% by mass or more of polycarbonate resin compositions that meet one or more of (i) to (iii) above, the color tone of the resulting recycled polycarbonate resin is significantly influenced, and in conventional material recycling, it is very difficult to obtain a recycled polycarbonate resin having a good color tone. On the other hand, in the inventive production method, a polycarbonate resin having a good color tone can be recycled even when a polycarbonate resin waste raw material is used in which polycarbonate resin compositions meeting one or more of (i) to (iii) above are mixed to be 5% by mass or more. Therefore, a polycarbonate resin waste raw material containing 5% by mass or more of polycarbonate resin compositions meeting one or more of (i) to (iii) above can be said to be suitable as a raw material for the inventive production method.

As described later, with ease of dissolution and handleability in mind, a pulverized product of polycarbonate resin compositions meeting one or more of (i) to (iii) above is preferably used at 5% by mass or more for the polycarbonate resin waste raw material.

The polycarbonate resin composition is a composition containing a polycarbonate resin, and examples thereof include polymer alloys such as polymer blends of a polycarbonate resin and another resin in addition to single polycarbonate resins. The polycarbonate resin composition may contain two or more polycarbonate resins differing in composition and molecular weight. Examples of the other resin include copolymer resins such as ABS resins which are copolymers of acrylonitrile, butadiene and styrene, and AS resins, polyesters such as polyethylene terephthalate (PET) and polybutylene terephthalate (PBT), and acrylic resin (PMMA).

The polycarbonate resin composition typically contains additives and the like suitable for purposes, and the content of the polycarbonate resin in the polycarbonate resin composition is, for example, 20 to 100% by mass or 50 to 100% by mass. The polycarbonate resin may be a homopolymer with identical constituent units, or may be copolymers containing different constituent units. Examples of the additives include glass fibers, carbon fibers, pigments, dyes, ultraviolet absorbers, and flame retardants.

The polycarbonate resin waste raw material preferably contains 10% by mass or more, more preferably 20% by mass or more, further more preferably 30% by mass or more of the polycarbonate resin.

The polycarbonate resin typically contains structural units which are repeated bisphenol units and carbonate units and each of which is represented by the following formula (A), and the content of the structural units each represented by the following formula (A) is typically 20 mol% or more, preferably 30 mol% or more, and more preferably 40 mol% or more.

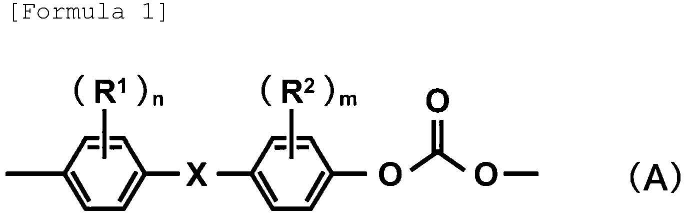

In the formula (A), X is one selected from the group consisting of a single bond, an alkylene group having 2 to 8 carbon atoms, a cycloalkylene group having 5 to 15 carbon atoms, an alkylidene group having 1 to 8 carbon atoms, a cycloalkylidene group having 5 to 15 carbon atoms, a fluorenylidene group, a xanthenylidene group, a thioxanthenylidene group, -O-, -S-, -CO-, -SO- and -SO₂-.

The alkylene group having 2 to 8 carbon atoms may be substituted or unsubstituted, and may be linear or branched. Examples of the alkylene group having 2 to 8 carbon atoms include an ethane-1,2-diyl group, a propane-1,2-diyl group, a propane-1,3-diyl group, a butane-1,2-diyl group, a butane-1,4-diyl group, a hexane-1,2-diyl group, and a hexane-1,6-diyl group.

Examples of the cycloalkylene group having 5 to 15 carbon atoms may be substituted or unsubstituted. Examples of the cycloalkylene group having 5 to 15 carbon atoms include a cyclopropane-1,2-diyl group, and a cyclohexane-1,2-diyl group.

The alkylidene group having 1 to 8 may be substituted or unsubstituted, and may be linear or branched. The alkylidene group having 1 to 8 is preferably a group represented by the following formula (1a).

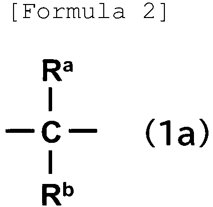

R^{a} and R^{b} each independently represent a hydrogen atom, an alkyl group having 1 to 7 carbon atoms, a cycloalkyl group having 3 to 7 carbon atoms, an alkoxy group having 1 to 7 carbon atoms, or an aryl group having 6 or 7 carbon atoms. These may be substituted or unsubstituted. Examples thereof include a hydrogen atom, a methyl group, an ethyl group, an n-propyl group, an i-propyl group, an n-butyl group, an i-butyl group, a t-butyl group, an n-pentyl group, an i-pentyl group, an n-hexyl group, an n-heptyl group, a 2-ethylhexyl group, a methoxy group, an ethoxy group, an n-propoxy group, an i-propoxy group, an n-butoxy group, an i-butoxy group, a t-butoxy group, an n-pentyloxy group, an i-pentyloxy group, an n-hexyloxy group, an n-heptyloxy group, a cylopropyl group, a cyclobutyl group, a cyclopentyl group, a cyclohexyl group, a cycloheptyl group, a benzyl group, a phenyl group, and a tolyl group.

The cycloalkylidene group having 5 to 15 carbon atoms may be substituted or unsubstituted. Examples of the cycloalkylidene group having 5 to 15 carbon atoms include a cyclopropane-1,1-diyl group, a cyclobutene-1,1-diyl group, a cyclopentane-1,1-diyl group, a cyclohexane-1,1-diyl group, a 3,3,5-trimethylcyclohexane-1,1-diyl group, a cycloheptane-1,1-diyl group, a cyclooctane-1,1-diyl group, a cyclononane-1,1-diyl group, a cyclodecane-1,1-diyl group, a cycloundecane-1,1-diyl group, and a cyclododecane-1,1-diyl group.

X in the formula (A) is preferably an alkylidene group having 1 to 8 carbon atoms, a cycloalkylidene group having 5 to 15 carbon atoms, or a fluorenylidene group, more preferably an alkylidene group having 1 to 8 carbon atoms, and further more preferably a propane-2,2-diyl group.

In the formula (A), R¹ and R² are each independently one selected from the group consisting of a halogen atom, an alkyl group having 1 to 12 carbon atoms, a cycloalkyl group having 1 to 12 carbon atoms, an alkoxy group having 1 to 12 carbon atoms, and an aryl group having 6 to 12 carbon atoms. When each of n and m is 2 or more, a plurality of R¹ and a plurality of R² may be the same groups or different groups, respectively. The alkyl group having 1 to 12 carbon atoms, the cycloalkyl group having 1 to 12 carbon atoms, the alkoxy group having 1 to 12 carbon atoms, and aryl group having 6 to 12 carbon atoms may be substituted or unsubstituted.

Examples of R¹ and R² include a fluoro atom, a chloro atom, a bromo atom, an iodo atom, a methyl group, an ethyl group, an n-propyl group, an i-propyl group, an n-butyl group, an i-butyl group, a t-butyl group, an n-pentyl group, an i-pentyl group, an n-hexyl group, an n-heptyl group, an n-octyl group, an n-nonyl group, an n-decyl group, an n-undecyl group, an n-dodecyl group, a cyclopropyl group, a cyclobutyl group, a cyclopentyl group, a cyclohexyl group, a cycloheptyl group, a cyclooctyl group, a cyclododecyl group, a methoxy group, an ethoxy group, an n-propoxy group, an i-propoxy group, an n-butoxy group, an i-butoxy group, a t-butoxy group, an n-pentyloxy group, an i-pentyloxy group, an n-hexyloxy group, an n-heptyloxy group, an n-octyloxy group, an n-nonyloxy group, an n-decyloxy group, an n-undecyloxy group, an n-dodecyloxy group, a benzyl group, a phenyl group, a tolyl group, and a 2,6-dimethylphenyl group.

R¹ and R² are, preferably, each independently an alkyl group having 1 to 12 carbon atoms, and more preferably, each independently an alkyl group having 1 to 5 carbon atoms.

In the formula (A), n and m are each independently an integer of 0 to 3. Each of n and m is preferably independently 0 to 2, and more preferably independently 0 or 1.

In particular, the formula (A) is preferably the following formula (A2).

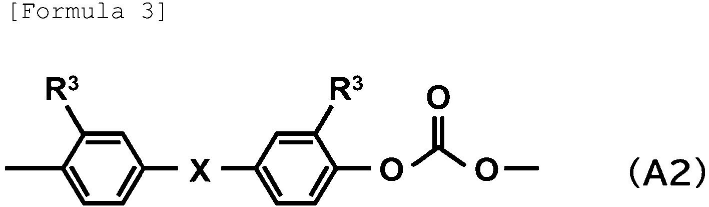

In the formula (A2), X is as defined for the formula (A). Preferred forms thereof are the same as those for the formula (A), and X in the formula (A2) is preferably an alkylidene group having 1 to 8 carbon atoms, a cycloalkylidene group having 5 to 15 carbon atoms, or a fluorenylidene group, more preferably an alkylidene group having 1 to 8 carbon atoms, and further more preferably a propane-2,2-diyl group.

In the formula (A2), R³ is one selected from the group consisting of a hydrogen atom, a halogen atom, an alkyl group having 1 to 12 carbon atoms, a cycloalkyl group having 1 to 12 carbon atoms, an alkoxy group having 1 to 12 carbon atoms, and an aryl group having 6 to 12 carbon atoms. R³ is preferably a hydrogen atom or an alkyl group having 1 to 12 carbon atoms, more preferably a hydrogen atom or an alkyl group having 1 to 5 carbon atoms, and further more preferably a hydrogen atom or a methyl group.

In the formula (A2), X is preferably a propane-2,2-diyl group, with R³ being a hydrogen atom or a methyl group.

Specifically, examples of the bisphenol unit of the structural unit represented by the above formula (A) include, but are in no way limited to, those derived from bisphenol, such as 2,2-bis(4-hydroxyphenyl)propane, 2,2-bis(4-hydroxy-3-methylphenyl)propane, 2,2-bis(4-hydroxy-3,5-dimethylphenyl)propane, 1,1-bis(4-hydroxy-3-methylphenyl)cyclohexane, 9,9-bis(4-hydroxy-3-methylphenyl)fluorene, 3,3-bis(4-hydroxyphenyl)pentane, 3,3-bis(4-hydroxy-3-methylphenyl)pentane, 2,2-bis(4-hydroxyphenyl)pentane, 2,2-bis(4-hydroxy-3-methylphenyl)pentane, 3,3-bis(4-hydroxyphenyl)heptane, 3,3-bis(4-hydroxy-3-methylphenyl)heptane, 2,2-bis(4-hydroxyphenyl) heptane, 2,2-bis(4-hydroxy-3-methylphenyl) heptane, 4,4-bis(4-hydroxyphenyl)heptane and 4,4-bis(4-hydroxy-3-methylphenyl)heptane.

In particular, the bisphenol unit of the structural unit represented by the above formula (A) is preferably a structure derived from one selected from the group consisting of 2,2-bis(4-hydroxyphenyl)propane, 2,2-bis(4-hydroxy-3-methylphenyl)propane, 2,2-bis(4-hydroxy-3,5-dimethylphenyl)propane and 1,1-bis(4-hydroxy-3-methylphenyl)cyclohexane, more preferably a structure derived from 2,2-bis(4-hydroxyphenyl)propane or 2,2-bis(4-hydroxy-3-methylphenyl)propane, and particularly preferably a structure derived from 2,2-bis(4-hydroxyphenyl) propane.

The post-consumer material that is used as a polycarbonate resin waste raw material is typically used polycarbonate resin composition after incorporation into a product as a molded article or indoor or outdoor use as an outer packaging by consumers. Examples of the molded article in which a polycarbonate resin composition is used include housings for electronic equipment, miscellaneous goods, lamps for lighting, automobile interiors and exteriors, transport containers, and building materials. The pre-consumer material includes purge resins generated in polymerization and compounding, and polycarbonate resins having failed to meet the quality of ready-made articles.

For the polycarbonate resin waste raw material, a post-consumer material is preferably used from the viewpoint of burden on the environment. The period of use (period spent for use) of the post-consumer material is preferably 3 years or more, more preferably 5 years or more, and further more preferably 7 years or more. An excessively short period of use is not preferable from the viewpoint of burden on the environment because the polycarbonate resin is recycled although degradation has not occurred. An excessively long period of use may lead to considerable degradation of the polycarbonate resin, resulting in an inability to sufficiently recover the physical properties even when reclamation is performed. In this respect, the period of use is preferably 30 years or less, and more preferably 20 years or less.

The polycarbonate resin waste raw material may be directly used in a shape of a resin composition as a post-consumer material or a pre-consumer material, or may be used after being divided into pieces with an appropriate size by cutting, crushing/pulverization or the like as appropriate. The division method such as cutting or crushing/pulverizing is not limited, and examples of the method that can be used include cutting that involves the use of a cutting tool; fusion cutting that involves cutting with gas, plasma, laser or the like; tearing; cutting that involves the use of a shredder; coarse crushing that involves crushing to 20 cm or less with a jaw crusher or a revolving crusher; medium crushing that involves crushing to 1 cm or less with a revolving crusher, a cone crusher or a mill; and pulverization that involves crushing to 1 mm or less with a mill. These methods may be carried out alone, or carried out in combination of two or more thereof.

An excessive large shape of the polycarbonate resin waste raw material is not preferable because the dissolution time increases. Thus, a pulverized product obtained by pulverizing the polycarbonate resin composition is preferably used as the polycarbonate resin waste raw material. The pulverized product of the polycarbonate resin composition preferably has a shape of 53 mm or less, more preferably has a shape of 22.4 mm or less, and more preferably has a shape of 11.2 mm or less. On the other hand, the pulverized product of the polycarbonate resin composition preferably has a shape of 2.8 mm or more, more preferably 4.75 mm or more, since an excessively small shape may lead to scattering as dust in loading into an apparatus.

The term "53 mm or less" means passage through a sieve of 53 mm in nominal aperture specified in JIS-Z-8801-1 (2019), the term "22.4 mm or less" means passage through a sieve of 22.4 mm in the nominal aperture, and the term "11.2 mm or less" means passage through a sieve of 11.2 mm in the nominal aperture. The term "2.8 mm or more" means failure to pass through a sieve of 2.8 mm in the nominal aperture, and the term "4.75 mm or more" means failure to pass through a sieve of 4.75 mm in the nominal aperture.

### (Good solvent)

The good solvent for dissolving the polycarbonate resin waste raw material is not limited as long as it is able to dissolve the polycarbonate resin waste raw material. The good solvent preferably contains a halogen-based solvent and/or a phenol-based solvent. Examples of the halogen-based solvent include dichloromethane and dichloroethane. Examples of the phenol-based solvent include phenol, cresol, xylenol, ethylphenol, propylphenol, butylphenol, methoxyphenol, ethoxyphenol, propoxyphenol, butoxyphenol, benzylphenol, phenylphenol, chlorophenol, dichlorophenol, and chloromethylphenol. The ratio of the halogen-based solvent and/or phenol-based solvent is not limited as long as it allows the polycarbonate resin waste raw material to be dissolved, but the ratio of those solvents in total to the good solvent is preferably 10% by mass or more, more preferably 20% by mass or more, and further more preferably 30% by mass or more. That is, when the good solvent contains a halogen-based solvent, and does not contain a phenol-based solvent, the ratio of the halogen-based solvent to the good solvent is preferably in the above-described range. When the good solvent contains a phenol-based solvent, and does not contain a halogen-based solvent, the ratio of the phenol-based solvent to the good solvent is preferably in the above-described range. When the good solvent contains a halogen-based solvent and a phenol-based solvent, the proportion of the halogen-based solvent and the phenol-based solvent in total to the good solvent is preferably in the above-described range.

The good solvent may contain solvents other than a halogen-based solvent and a phenol-based solvent, specific examples of which include aromatic hydrocarbon-based solvents such as toluene and xylene; cyclohexanone; tetrahydrofuran (THF); acetonitrile; dimethyl carbonate; hexafluoroisopropyl alcohol; and water. For the good solvent, the above-mentioned solvents can be used in combination as appropriate such that the polycarbonate resin waste raw material is dissolved at a dissolution temperature.

The amount of the good solvent is preferably 200% by mass or more, more preferably 250% by mass or more, and further more preferably 350% by mass or more with respect to the mass of the polycarbonate resin waste raw material. A small proportion of the good solvent may lead to an extremely high viscosity of the solution, which causes difficulty in stirring and dissolution, and a decreased filtration rate and attachment of a filtrate to filtering media during filtration, resulting in a decreased yield. The amount of the good solvent is preferably 5,000% by mass or less, more preferably 4,000% by mass or less, and further more preferably 3,000% by mass or less with respect to the mass of the polycarbonate resin waste raw material. A large proportion of the good solvent may lead to an increased degree of solubility of the polycarbonate resin, which increases the amount of a polycarbonate resin that remains dissolved in the good solvent and is not deposited even when the poor solvent is added in step (3), resulting in deterioration of the yield. Thus, the amount of the good solvent is preferably 200% by mass or more and 5,000% by mass or less, more preferably 250% by mass or more and 4,000% by mass or less, and further more preferably 350% by mass or more and 3,000% by mass or less with respect to the mass of the polycarbonate resin waste raw material.

### (Dissolution temperature)

It is preferable to control the temperature (the temperature of a solution in a dissolution bath) when the polycarbonate resin waste raw material is dissolved in the good solvent. If the temperature is not controlled, the dissolution time may become uneven, leading to generation of an undissolved content in solution feeding for a next step. The temperature is preferably equal to or lower than the boiling point of the good solvent. A condenser is required for the dissolution bath, and the process becomes complicated. The specific temperature of the good solvent (the temperature of the solution in the dissolution bath) is preferably 10°C or higher, more preferably 15°C or higher, and further more preferably 20°C or higher. An excessively low temperature reduces the degree of solubility of the polycarbonate, so that it takes time for dissolution. In solution feeding for a next step, it may take time for the solution feeding, and in filtration, a heavy burden may accompany the filtration. The dissolution temperature is preferably 140°C or lower, more preferably 130°C or lower, and further more preferably 120°C or lower. If the temperature is excessively high, the polycarbonate resin may be degraded by heat, and colored. Thus, the dissolution temperature is preferably 10 to 140°C, more preferably 15 to 130°C, and further more preferably 20 to 120°C.

### (Dissolution time)

The dissolution time is preferably 20 minutes or more, more preferably 40 minutes or more, and further more preferably 1 hour or more. The dissolution time is preferably 5 hours or less, more preferably 4 hours or less, and further more preferably 3 hours or less. An excessively short dissolution time may lead to an increase in undissolved content, resulting in reduction of the yield, blocking in the process, and the like. An excessively long dissolution time may cause decomposition and coloration of the polymer. Thus, the dissolution time is preferably 20 minutes to 5 hours, more preferably 40 minutes to 4 hours, and further more preferably 1 hour to 3 hours.

### [Step (S2)]

Step (S2) is a step of bringing the polycarbonate resin solution into contact with an agglomerating agent, and subsequently removing undissolved substances to prepare a solution (L) free of undissolved substances.

The purpose of carrying out step (S2) is to facilitate removal of undissolved substances. As described above, the polycarbonate resin waste raw material contains various additives in addition to the polycarbonate resin composition. Among them, carbon black, titanium oxide and the like used for coloration have a very small particle size, and when filtration through a filter is performed for removal of undissolved substances, these additives are not caught by the filter, and the undissolved substances remain in the filtrate. In addition, when undissolved substances are settled by centrifugation or the like, these additives are not settled, and they are difficult to remove by centrifugation. In particular, a colored polycarbonate resin composition cannot be cleared of a pigment used as a colorant, and as a result, colored components remain in a recycled polycarbonate resin, leading to color tone deterioration. The color tone deterioration leads to an inability to form a transparent recycled polycarbonate resin, and an inability to give a desired color for making a recycled molded article, which results in narrowing of the application range of recycled polycarbonate resins. Accordingly, the purpose of step (S2) is to promote aggregation of small undissolved substances by bringing an agglomerating agent into contact with a polycarbonate resin solution. The inventive production method is characterized in that through the step, undissolved substances can be removed by enabling undissolved substances to be caught in filtration through a filter, and enabling undissolved substances to be settled by centrifugation or the like.

### (Agglomerating agent)

The reason why undissolved substances have a small particle size is that charge repulsion between undissolved substances disperses the undissolved substances. The agglomerating agent plays the role of neutralizing the charges of undissolved substances dispersed in a polycarbonate resin solution, and thus promoting adsorption and aggregation of the undissolved substances to increase the particle sizes of the undissolved substances. Thus, for the agglomerating agent, any inorganic salt may be used as long as it can be ionized in the polycarbonate resin solution, and is other than an alkali metal salt and an alkaline earth metal salt which decompose the polycarbonate resin. Among them, iron (III) chloride, iron (I) sulfate, iron (II) sulfate, aluminum chloride, aluminum sulfate, titanium oxide, copper (I) sulfate, copper (II) sulfate, copper (I) chloride, copper (II) chloride, zinc sulfate and the like are preferable. A mixture of inorganic salts commercially available as an agglomerating agent may be used. An inorganic salt can neutralize charges, but if the particle size of aggregated particles is small, a polymer compound such as an anionic polymer compound, a cationic polymer compound or a nonionic polymer compound may be added. This is because undissolved substances dispersed in the polycarbonate resin solution attach to a polymer chain, so that the particle size can be increased. The polymer compound alone can be used as an agglomerating agent. Representative examples of the polymer compound include polyacrylamide, and polyethylene oxide.

Thus, the agglomerating agent in step (S2) is preferably one or more selected from the group consisting of iron (III) chloride, iron (I) sulfate, iron (II) sulfate, aluminum chloride, aluminum sulfate, titanium oxide, copper (I) sulfate, copper (II) sulfate, copper (I) chloride, copper (II) chloride, zinc sulfate, an anionic polymer compound, a cationic polymer compound and a nonionic polymer compound, and more preferably one or more selected from the group consisting of iron (III) chloride, iron (II) sulfate, iron (III) sulfate, aluminum sulfate, aluminum chloride, polyacrylamide and polyethylene oxide.

The method for bringing a polycarbonate resin solution into contact with an agglomerating agent is not limited. An agglomerating agent may be mixed during preparation of the polycarbonate resin solution in step (S1), or an agglomerating agent may be contacted after preparation of the polycarbonate resin solution in step (S1).

For example, in step (S1), the polycarbonate resin waste raw material, a good solvent and an agglomerating agent can be mixed, with the polycarbonate resin brought into contacted with the agglomerating agent while being dissolved in the good solvent. In the case of contact with the agglomerating agent after preparation of the polycarbonate resin solution in step (S1), the agglomerating agent may be directly added to the polycarbonate resin solution to establish the contact, the agglomerating agent may be packed onto the filtering media, and brought into contacted with the polycarbonate resin solution, or the contact may be established by packing the agglomerating agent in a columnar shape, to which the polycarbonate resin solution is poured.

Among them, the method is preferable in which after step (S1), the agglomerating agent is directly added to the polycarbonate resin solution to establish the contact.

In the case of contact with the agglomerating agent after preparation of the polycarbonate resin solution in step (S1), the time of contact between the polycarbonate resin solution and the agglomerating agent is preferably 5 minutes or more, more preferably 10 minutes or more, and further more preferably 20 minutes or more. If the time is excessively short, it may be impossible to sufficiently exhibit the effect of aggregation. The time of contact with the agglomerating agent is preferably 3 hours or less, and more preferably 2 hours or less. If the time is excessively long, once aggregated particles may be dispersed by stirring or the like. Thus, the time of contact with the agglomerating agent is preferably 5 minutes to 3 hours, more preferably 10 minutes to 3 hours, and further more preferably 20 minutes to 2 hours.

In the case of contact with the agglomerating agent after preparation of the polycarbonate resin solution in step (S1), the temperature of contact between the polycarbonate resin solution and the agglomerating agent may be identical to the temperature at which the polycarbonate resin is dissolved in step (S1), with the temperature being preferably 20°C or higher and preferably 140°C or lower. If the temperature is excessively high, the polycarbonate resin may be colored. If the temperature is excessively low, there is a possibility that aggregation does not proceed. The temperature is therefore more preferably 30°C or higher and 90°C or lower.

The amount of the agglomerating agent to be used is preferably 0.1% by mass or more, and more preferably 0.5% by mass or more with respect to the mass of the polycarbonate resin waste raw material dissolved. If the amount of the agglomerating agent to be used is excessively small, it may be impossible to sufficiently promote aggregation of undissolved substances, leading to an inability to remove the undissolved substances. The amount of the agglomerating agent to be used is preferably 20% by mass or less, and more preferably 10% by mass or less with respect to the mass of the polycarbonate resin waste raw material dissolved. If the amount of the agglomerating agent is excessively large, the agglomerating agent itself may cause coloration by remaining in the recycled polycarbonate resin. Thus, the amount of the agglomerating agent to be used is preferably 0.1 to 20% by mass, and more preferably 0.5 to 10% by mass with respect to the mass of the polycarbonate resin waste raw material dissolved.

### (Filter aid)

In the inventive production method, a filter aid and an agglomerating agent may be used in combination, and the inventive production method preferably comprises, before removal of undissolved substances in step (S2), a step of bringing the polycarbonate resin solution into contact with the filter aid. The method for bringing the polycarbonate resin solution into contact with the filter aid may be identical to or different from the method for bringing the polycarbonate resin solution into contact with the agglomerating agent. The contact of the polycarbonate resin solution with the filter aid may, or is not required to, be coincident in time with the contact with the agglomerating agent. That is, the polycarbonate resin solution, the agglomerating agent and the filter aid may be contacted at the same time, the polycarbonate resin solution and the agglomerating agent may be contacted, followed by contact of the filter aid, or the polycarbonate resin solution and the filter aid may be contacted, followed by contact of the agglomerating agent. By using the agglomerating agent and the filter aid in combination as described above, degraded products, foreign resins, additives, contaminants and the like contained in the polycarbonate resin composition can be more efficiently removed.

The filter aid for use in the present invention is preferably one or more selected from the group consisting of activated carbon, celite, montmorillonite, silica gel and a synthetic adsorbent.

Examples of the shape of the activated carbon include a shape of powder, a shape of particle (fragment, grain, sphere, cylinder and the like) and a shape of fiber, any of which may be used. As a raw material for the activated carbon, any of sawdust, palm shells, coal, charcoal and the like can be used. The activated carbon may be activated carbon obtained by activation using a method such as a gas activation method, a steam activation method or a chemical activation method.

Examples of the montmorillonite include bentonite, and activated white earth. Examples of the activated white earth include GALLEON EARTH (registered trademark) and GALLEONITE (registered trademark) celite manufactured by Mizusawa Industrial Chemicals, Ltd., and NIKKA-NITE manufactured by Toshin Chemicals Co., Ltd.

The synthetic adsorbent is a bridged polymer having a porous structure. Examples of the synthetic adsorbent include aromatic adsorbents, aromatic-modified adsorbents, and methacrylic adsorbents, any of which may be used. Specific examples thereof include SEPABEADS (registered trademark) manufactured by Mitsubishi Chemical Corporation.

The method for contacting a polycarbonate resin solution and a filter aid is not limited. The filter aid may be mixed during preparation of the polycarbonate resin solution. After preparation of the polycarbonate resin solution, the filter aid may be directly added to the polycarbonate resin solution to establish the contact, or may be packed onto the filtering media, and brought into contacted with the polycarbonate resin solution, or the contact may be established by packing the filter aid in a columnar shape, to which the polycarbonate resin solution is poured. These methods may be appropriately combined to contact the polycarbonate resin solution and the filter aid one or more times.

The amount of the filter aid used is not limited as long as it is an amount which allows colored components and impurities to be sufficiently adsorbed. The amount of the filter aid used, in the case where it is directly added, is preferably 0.1% by mass, and more preferably 0.5% by mass or more with respect to the mass of the polycarbonate resin waste raw material dissolved. If the amount of the filter aid is excessively small, it may be impossible to sufficiently remove colored components and impurities. The amount of the filter aid used is preferably 30% by mass or less, and preferably 20% by mass or less with respect to the mass of the polycarbonate resin waste raw material dissolved. If the amount of the filter aid is excessively large, it may be impossible to sufficiently remove the filter aid, resulting in color tone deterioration. Thus, in the case where the filter aid is directly added, the amount of the filter aid used is preferably 0.1 to 30% by mass, and more preferably 0.5 to 20% by mass with respect to the mass of the polycarbonate resin waste raw material dissolved.

On the other hand, the amount of the filter aid used, in the case where it is packed over the filtering media or packed in a columnar shape, is preferably 20% by mass or more, and more preferably 40% by mass or more with respect to the mass of the polycarbonate resin waste raw material dissolved. If the amount of the filter aid is excessively small, it may be impossible to sufficiently remove colored components and impurities. The amount of the filter aid used is preferably 5,000% by mass or less, and more preferably 2,000% by mass or less with respect to the mass of the polycarbonate resin waste raw material dissolved. If the amount of the filter aid is excessively large, the recycled polycarbonate resin may contain an large amount of impurity components eluted from the filter aid. Thus, the amount of the filter aid used, in the case where it is packed over the filtering media, is preferably 20 to 5,000% by mass, and more preferably 40 to 2,000% by mass with respect to the mass of the polycarbonate resin waste raw material dissolved.

The filter aid can be repeatedly used by regeneration before and after the use. In the regeneration of the filter aid before and after the use, the filter aid may be cleaned with steam, heat or an organic solvent. The cleaning may remove impurities contained in the filter aid, and have an effect of reducing the amount of impurities in the resulting recycled polycarbonate resin.

The agglomerating agent and the filter aid are preferably a combination of an agglomerating agent which is one or more selected from the group consisting of iron (III) chloride, iron (I) sulfate, iron (II) sulfate, aluminum chloride, aluminum sulfate, titanium oxide, copper (I) sulfate, copper (II) sulfate, copper (I) chloride, copper (II) chloride, zinc sulfate, an anionic polymer compound, a cationic polymer compound and a nonionic polymer compound, and a filter aid which is one or more selected from the group consisting of activated carbon, celite, montmorillonite, silica gel and a synthetic adsorbent, and more preferably a combination of an agglomerating agent which is one or more selected from the group consisting of iron (III) chloride, iron (II) sulfate, iron (III) sulfate, aluminum sulfate, aluminum chloride, polyacrylamide and polyethylene oxide, and a filter aid which is one or more selected from the group consisting of activated carbon, celite, montmorillonite, silica gel and a synthetic adsorbent.

### (Removal of undissolved substances)

Examples of the method for removing undissolved substances from the polycarbonate resin solution include methods using a filter, such as filtration, centrifugation, and cyclonic filtration, and methods in which solid-liquid separation to separate undissolved substances is performed on standing separation, centrifugation, floating separation or the like, and the liquid phase is taken out. In the case where insoluble substances are removed using a filter, any of a paper filter, a glass filter, a bag filter, a candle filter and the like may be used. The filtering may involve a plurality of steps or a plurality of methods. The smallest aperture of the filtering media is preferably 5 µm or less, more preferably 2 µm or less, and further more preferably 1 µm or less. If the aperture is excessively large, removal of foreign substances becomes insufficient. If the aperture is excessively small, the filtering property tends to deteriorate. For improving the filtering property, an aromatic hydrocarbon-based solvent may be added during removal of undissolved substances. For example, the polycarbonate resin solution may be supplied with the aromatic hydrocarbon-based solvent, and subsequently filtered through the filtering media to remove undissolved substances, or the polycarbonate resin solution and the aromatic hydrocarbon-based solvent may be filtered in parallel through the filtering media to remove undissolved substances.

### [Step (S3)]

Step (S3) is a step of precipitating the recycled polycarbonate resin by mixing the solution (L) with a poor solvent.

### (Poor solvent)

The poor solvent that can be used for precipitating the recycled polycarbonate resin is not limited as long as it enables precipitation of the recycled polycarbonate resin. Examples of the poor solvent include ketone-based solvents such as acetone, methyl ethyl ketone, methyl isobutyl ketone (MIBK) and cyclohexanone; saturated hydrocarbon-based solvents such as hexane, heptane and cyclohexane; alcohol-based solvents such as methanol, ethanol and isopropyl alcohol; water; toluene and xylene; THF; acetonitrile; dimethyl carbonate; and hexafluoroisopropyl alcohol.

The poor solvent preferably contains one or more selected from the group consisting of a ketone-based solvent, a saturated hydrocarbon-based solvent, an alcohol-based solvent and water, and more preferably contains one or more selected from the group consisting of acetone, ethanol, water, methanol, isopropyl alcohol, hexane, cyclohexane, heptane and MIBK. Among them, acetone is preferable because it has a low boiling point, so that recovery of the solvent and the like are facilitated.

The proportion of one or more solvents selected from the group consisting of a ketone-based solvent, a saturated hydrocarbon-based solvent, an alcohol-based solvent and water is not limited as long as it allows the polycarbonate to be precipitated, but the ratio of the solvents in total to the entire poor solvent is preferably 10% by mass or more, more preferably 20% by mass or more, and further more preferably 30% by mass or more.

The poor solvent is preferably 200% by mass or more, more preferably 250% by mass or more, and further more preferably 350% by mass or more with respect to the mass of the polycarbonate resin waste raw material. A small proportion of the poor solvent may lead to failure to sufficiently generate a precipitate, and reduced flowability in the subsequence step (S4). The poor solvent is preferably 5,000% by mass or less, more preferably 4,000% by mass or less, and further more preferably 3,000% by mass or less with respect to the polycarbonate resin waste raw material. If the proportion of the poor solvent is high, the polycarbonate resin may be dissolved even in the poor solvent, resulting in deterioration of the yield. Thus, the amount of the poor solvent is preferably 200 to 5,000% by mass, more preferably 250 to 4,000% by mass, further more preferably 350 to 3,000% by mass with respect to the mass of the polycarbonate resin waste raw material.

It is preferable to control the temperature (the temperature of a solution in an apparatus) when the recycled polycarbonate resin is deposited by adding the poor solvent. If the temperature is not controlled, the precipitation time may become uneven, leading to deterioration of the yield due to insufficient precipitation in solution feeding for a next step. The temperature during the deposition operation is preferably equal to or lower than the boiling points of the good solvent and the poor solvent. If the temperature is above the boiling points of the good solvent and the poor solvent, the degree of solubility of the polycarbonate resin increases, so that it is difficult to sufficiently recover the polycarbonate resin. The specific temperature of the solution (temperature of a solution in an apparatus) during the deposition operation is preferably 10°C or higher, more preferably 15°C or higher, and further more preferably 20°C or higher. If the temperature is excessively low, it may take time for solution feeding in the solution feeding for a next step, and a heavy burden may accompany filtration in the filtration. The temperature is preferably 140°C or lower, more preferably 130°C or lower, and further more preferably 120°C or lower. If the temperature is excessively high, the polycarbonate resin may be degraded by heat, and colored. Thus, the temperature at which the recycled polycarbonate resin is deposited is preferably 10 to 140°C, more preferably 15 to 130°C, and further more preferably 20 to 120°C.

The good solvent and the poor solvent are preferably a combination of a good solvent containing a halogen-based solvent and/or a phenol-based solvent, and a poor solvent containing one selected from the group consisting of a ketone-based solvent, a saturated hydrocarbon-based solvent, an alcohol-based solvent and water, and more preferably the combination in which each of the good solvent and the poor solvent is 200% by mass or more and 5,000% by mass or less with respect to the polycarbonate resin waste raw material.

The ratio of the poor solvent to the good solvent is preferably 0.4 or more, and more preferably 1 or more, and preferably 2 or less. If the ratio of the poor solvent to the good solvent is excessively small, the amount of the recycled polycarbonate resin deposited decreases. If the ratio of the poor solvent to the good solvent is excessively large, the process may excessively extend, and the burden accompanying solvent recovery may increase. Thus, the ratio of the poor solvent to the good solvent is preferably 0.4 to 2, and more preferably 1 to 2.

### [Step (S4)]

Step (S4) is a step of recovering the recycled polycarbonate resin precipitated.

### (Collection of recycled polycarbonate resin)

By step (S3), a suspension is obtained in which a recycled polycarbonate resin deposited is suspended in solvents (a good solvent and a poor solvent). The recycled polycarbonate resin in the suspension is collected using methods such as centrifugation and filtration. The temperature of the suspension is preferably 10°C or higher and 120°C or lower. If the temperature is excessively low, the viscosity increases. If the temperature is excessively high, the resin may be degraded.

The recycled polycarbonate resin collected is preferably dried under reduced pressure or at normal pressure because it contains solvents (a good solvent and a poor solvent). The drying temperature is preferably 30 to 120°C. If the drying temperature is excessively low, it takes much time for drying. If the drying temperature is excessively high, the polycarbonate resin may be degraded.

### (Solvent used)

It is preferable that the solvents used in the steps be separated by distillation or a film, and each reused as a good solvent or a poor solvent. Upon the reuse, 2 to 30% by mass of the solvents may be disposed of. If the amount of disposition is small, impurities may accumulate during the process, leading to an increased amount of impurities in the recycled polycarbonate resin. If the amount of disposition is large, the amount of solvents used increases, resulting in increased burden on the environment.

Steps (S1) to (S4) may be repeated two or more times. That is, the recycled polycarbonate resin collected in step (S4) may be, again, dissolved in the good solvent, treated with an agglomerating agent, and subsequently precipitated by adding the poor solvent. The steps may be identical or different in solvents used. When steps (S1) to (S4) are repeated, the number of the repetitions may be appropriately determined according to a use purpose and the like using indexes such as the L value and the amount of Na, Mg and Al of the recycled polycarbonate resin which will be described later. By repeating steps (S1) to (S4) two or more times, the amount of impurities contained in polycarbonate recycled decreases. On the other hand, an excessively large number of repetitions may lead to a decreased amount of recovery. In this respect, when steps (S1) to (S4) are repeated, the number of the repetitions is preferably 2 or 3.

### [Recycled polycarbonate resin]

The recycled polycarbonate resin obtained by the method for producing a recycled polycarbonate resin according to the present invention preferably contains structural units each represented by the above formula (A), and has the following characteristics.

### (L value)

The L value of the recycled polycarbonate resin is preferably 80 or more, more preferably 85 or more, and further more preferably 90 or more as measured by reflectometry. A low L value leads to poor color tone and low transparency when the recycled polycarbonate resin is molded into a molded article.

The L value of the recycled polycarbonate resin as measured by reflectometry can be measured in a reflection mode using a spectroscopic color-difference meter (for example, Spectrophotometer SE6000 manufactured by NIPPON DENSHOKU INDUSTRIES Co., Ltd.).

### (Amount of N)

The content of nitrogen atoms in the recycled polycarbonate resin is preferably 6 ppm by mass or less, more preferably 5 ppm by mass or less, and further more preferably 3 ppm by mass or less. The content of nitrogen atoms can be measured by a trace total nitrogen analyzer.

### (Amount of P)

The content of phosphorus atoms in the recycled polycarbonate resin is preferably 10 ppm by mass or less, more preferably 5 ppm by mass or less, and further more preferably 2 ppm by mass or less. The content of phosphorus atoms can be measured by inductively coupled plasma mass spectrometry (ICP-MS).

### (Amount of Na, Mg and Al)

The total content of Na, Mg and Al in the recycled polycarbonate resin is, for example, 20 ppm by mass or less, preferably 15 ppm by mass or less, more preferably 12 ppm by mass or less, and further more preferably 10 ppm by mass or less. If the polycarbonate resin contains a large amount of Na, Mg and Al, the color tone tends to be deteriorated when molding is performed. The total content of Na, Mg and Al in the recycled polycarbonate resin is preferably 0.3 ppm by mass or more, more preferably 0.5 ppm by mass or more, and further more preferably 1.0 ppm by mass or more. If the content is excessively small, a good color tone is obtained, but the achievement thereof requires a plurality of cleanings and the like, which means poor efficiency, with a high possibility that the yield decreases.

The total content of Na, Mg and Al in the recycled polycarbonate resin can be measured by inductively coupled plasma mass spectrometry (ICP-MS). Thus, the total content of Na, Mg and Al in the recycled polycarbonate resin is preferably 0.3 ppm by mass or more and 15 ppm by mass or less, more preferably 0.5 ppm by mass or more and 12 ppm by mass or less, and further more preferably 1.0 ppm by mass or more and 10 ppm by mass or less.

### (3 mm YI)

YI (yellow index) of a 3 mm-thick plate molded article of the recycled polycarbonate resin is preferably 3.0 or less, more preferably 2.9 or less, and further more preferably 2.7 or less. If the YI is excessively high, a yellow tint often develops, leading to a limitation on applications that are covered.

The YI can be measured according to ASTM D1925.

### (Nominal tensile strain)

The nominal tensile strain of the recycled polycarbonate resin is preferably 60% or more, more preferably 70% or more, and further more preferably 80% or more. A small nominal tensile strain may lead to fragility such that breakage occurs during formation or use of the molded article.

The nominal tensile strain of the recycled polycarbonate resin can be measured according to ISO 527 using a test piece obtained by molding the recycled polycarbonate resin into a dumbbell resin plate having a total length of 75 mm, a parallel portion length of 30 mm, a parallel portion width of 5 mm, a thickness of 2 mm, and a grip width of 10 mm.

### [Method for using recycled polycarbonate resin]

The recycled polycarbonate resin can be used for the same purposes as unused polycarbonate resins as a material that causes little burden on the environment. For example, the recycled polycarbonate resin can be widely used for housings and screens of mobile phones and the like, automobile interiors/exteriors, displays, medical equipment, building materials, and the like.

The recycled polycarbonate resin may be used alone in an amount of 100% to form a molded article, or may be used in mixture with a polycarbonate resin waste or an unused (new) polycarbonate resin. Additives may be blended, and a polymer alloy with resins other than a polycarbonate resin may be used. As the additives and the alloy, those that are commonly used can be appropriately used.

The recycled polycarbonate resin can be used in, for example, a method for producing a molded article, comprising the steps of preparing a recycled polycarbonate resin by the method for producing a recycled polycarbonate resin according to the present invention, and preparing a molded article using the obtained recycled polycarbonate resin. This enables the obtainment of a molded article comprising a recycled polycarbonate resin. Examples of the molded article include pellets; and members or products such as housings, automobile interiors/exteriors, display members, medical equipment members, and building materials. As a method for preparing a molded article, the same method as in the case of use of a conventional unused polycarbonate resin, and other resins and additives can be appropriately blended. The members or products may be produced using the recycled polycarbonate resin, or may be produced using pellets formed from the recycled polycarbonate resin.

### Examples

Hereinafter, the present invention will be described in further detail on the basis of Examples, but the present invention is not limited to Examples below as long as the spirit of the present invention is not changed.

### [Polycarbonate resin waste raw material]

- PC (1): a pulverized product of a polycarbonate housing of a smart meter used outdoors (transmittance at 500 nm: 0%, nitrogen content: 2 ppm by mass, phosphorus content: 1.1% by mass)
- PC (2): a pulverized product of a used polycarbonate carport (transmittance at 500 nm: 52%, nitrogen content: 86 ppm by mass, phosphorus content: 38 ppm by mass)
- PC (3): a pulverized product of a used projector (PC/ABS) (transmittance at 500 nm: 0%, nitrogen content: N.D. (not detected), phosphorus content: 0.82% by mass)

The raw materials were pulverized to about 10 mm square with a pulverizer before use.

### [Evaluation]

### (Transmittance at 500 nm)

For the transmittance at 500 nm, a solution with the polycarbonate resin waste raw material dissolved in methylene chloride to be a concentration of 10% by mass was prepared, the transmittance of the solution was measured with UV 1800 from Shimadzu Corporation using a 50 mm cell, and a transmittance at 500 nm was determined.

### (Content of nitrogen)

The nitrogen content of the polycarbonate resin waste raw material or the recycled polycarbonate resin was measured with a trace total nitrogen analyzer TN-10 (manufactured by Dia Instruments Co., Ltd.).

### (Content of phosphorus)

For the phosphorus content, the polycarbonate resin waste raw material or the recycled polycarbonate resin was subjected to wet decomposition by adding sulfuric acid, nitric acid and hydrogen peroxide thereto, and collected with pure water, followed by volume determination. Thereafter, measurement was performed with an ICP luminescent apparatus ("5800 ICP-OES" manufactured by Agilent Technologies, Inc.).

### (L value)

The obtained recycled polycarbonate resin was put in a circular cell, which was then covered with ZERO BOX. Measurement was performed in a reflection mode with a spectrophotometer SE6000 manufactured by NIPPON DENSHOKU INDUSTRIES Co., Ltd. to determine the L value.

### (Quantitative measurement of Na, Mg and Al)

200 mg of the obtained recycled polycarbonate resin was weighed out, and decomposed under pressure in a closed state with nitric acid using a microwave pretreatment apparatus (Multiwave 7000 manufactured by Anton Paar GmbH). Subsequently, the volume was determined, dilution was performed as appropriate, followed by ICP-MS quantitative measurement using ELEMENT 2 manufactured by Thermo Fisher Scientific Inc.

### (3 mm YI)

With the obtained recycled polycarbonate resin as a raw material, a plate of 3 mm in thickness, 25 mm in length and 25 mm in width was formed using a small injection molding machine (C, Mobile from SHINKO SELLBIC Co., LTD.). With the plate as a test piece, the yellow index (YI) was measured according to ASTM D1925 using a spectrophotometric colorimeter (CM-3700d manufactured by KONICA MINOLTA, INC.).

### (Nominal tensile strain)

With the obtained recycled polycarbonate resin as a raw material, a dumbbell resin plate having a total length of 75 mm, a parallel portion length of 30 mm, a parallel portion width of 5 mm, a thickness of 2 mm, and a grip width of 10 mm was formed at a cylinder temperature of 280°C and a mold temperature of 60°C using a small injection molding machine (C, Mobile from SHINKO SELLBIC Co., LTD.). With the dumbbell resin plate as a test piece, the nominal tensile strain was measured using a universal tester AGS-5kNX (manufactured by Shimadzu Corporation).

### [Example 1]

At 20°C under a nitrogen atmosphere, to a 10 L flask, 500 g of a pulverized product of PC (1) and 4.5 kg of methylene chloride were charged, and the resultant mixture was stirred for 30 minutes (step (1)). Subsequently, to the solution, 5 g of iron (III) chloride was added as an agglomerating agent, the stirring was continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 1 shows the results.

### [Example 2]

At 60°C under a nitrogen atmosphere, to a 10 L flask, 500 g of a pulverized product of PC (1) and 4.5 kg of phenol were charged, and the resultant mixture was stirred for 30 minutes (step (1)). Subsequently, to the solution, 15 g of iron (II) sulfate was added as an agglomerating agent, the stirring was continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 1 shows the results.

### [Example 3]

At 20°C under a nitrogen atmosphere, to a 10 L flask, 500 g of a pulverized product of PC (1) and 4.5 kg of methylene chloride were charged, and the resultant mixture was stirred for 30 minutes (step (1)). Subsequently, to the solution, 15 g of iron (III) sulfate was added as an agglomerating agent, the stirring was continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 1 shows the results.

### [Example 4]

At 80°C under a nitrogen atmosphere, to a 10 L flask, 500 g of a pulverized product of PC (1) and 4.5 kg of phenol were charged, and the resultant mixture was stirred for 30 minutes (step (1)). Subsequently, at 60°C, to the solution, 25 g of aluminum sulfate was added as an agglomerating agent, the stirring was continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 1 shows the results.

### [Example 5]

At 20°C under a nitrogen atmosphere, to a 10 L flask, 500 g of a pulverized product of PC (1) and 4.5 kg of methylene chloride were charged, and the resultant mixture was stirred for 30 minutes (step (1)). Subsequently, to the solution, 25 g of aluminum chloride was added as an agglomerating agent, the stirring was continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 1 shows the results.

### [Example 6]

At 60°C under a nitrogen atmosphere, to a 10 L flask, 500 g of a pulverized product of PC (1) and 4.5 kg of phenol were charged, and the resultant mixture was stirred for 30 minutes (step (1)). Subsequently, to the solution, 25 g of polyethylene oxide was added as an agglomerating agent, the stirring was continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 1 shows the results.

### [Example 7]

At 80°C under a nitrogen atmosphere, to a 10 L flask, 500 g of a pulverized product of PC (1) and 4.5 kg of a solvent obtained by mixing phenol and toluene at a mass ratio of 1:1 were charged, and the resultant mixture was stirred for 30 minutes (step (1)). Subsequently, at 60°C, to the solution, 5 g of iron (II) sulfate was added as an agglomerating agent, the mixture was stirred for 10 minutes, 5 g of polyacrylamide was then added, the stirring was further continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 1 shows the results.

### [Example 8]

At 80°C under a nitrogen atmosphere, to a 10 L flask, 500 g of a pulverized product of PC (2) and 4.5 kg of a solvent obtained by mixing phenol and toluene at a mass ratio of 3:7 were charged, and the resultant mixture was stirred for 30 minutes (step (1)). Subsequently, at 60°C, to the solution, 5 g of iron (III) chloride was added as an agglomerating agent, the stirring was continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 1 shows the results.

### [Example 9]

At 80°C under a nitrogen atmosphere, to a 10 L flask, 500 g of a pulverized product of PC (3) and 4.5 kg of a solvent obtained by mixing phenol and toluene at a mass ratio of 1:1 were charged, and the resultant mixture was stirred for 30 minutes (step (1)). Subsequently, at 60°C, to the solution, 5 g of iron (II) sulfate was added as an agglomerating agent, the stirring was continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 1 shows the results.

**[Table 1]**

| | Example 1 | Example 2 | Example 3 | Example 4 | Example 5 | Example 6 | Example 7 | Example 8 | Example 9 |
|---|---|---|---|---|---|---|---|---|---|
| Raw material | PC(1) | PC(1) | PC(1) | PC(1) | PC(1) | PC(1) | PC(1) | PC(2) | PC(3) |
| Agglomerating agent (1) | Iron (III) chloride | Iron (II) sulfate | Iron (III) sulfate | Aluminum sulfate | Aluminum chloride | Polyethylene oxide | Iron (II) sulfate | Iron (III) chloride | Iron (II) sulfate |
| Amount of agglomerating agent (1) added with respect to raw material (% by mass) | 1 | 3 | 3 | 5 | 5 | 5 | 1 | 1 | 1 |
| Agglomerating agent (2) | - | - | - | - | - | - | Polyacrylamide | - | - |
| Amount of agglomerating agent (2) added with respect to raw material (% by mass) | - | - | - | - | - | - | 1 | - | - |
| Filter aid | - | - | - | - | - | - | - | - | - |
| Amount of filter aid added with respect to raw material (% by mass) | - | - | - | - | - | - | - | - | - |
| Good solvent | Methylene chloride | Phenol | Methylene chloride | Phenol | Methylene chloride | Phenol | Phenol/toluene | Phenol/toluene | Phenol/toluene |
| Poor solvent | Acetone | Acetone | Acetone | Acetone | Acetone | Acetone | Acetone | Acetone | Acetone |
| L value | 97.2 | 96.2 | 95.8 | 95.2 | 93.2 | 83.1 | 96.9 | 96.6 | 97.2 |
| N (ppm) | <1 | <1 | **<1** | <1 | **<1** | <1 | <1 | 3.0 | **<1** |
| P (ppm) | <2 | <2 | 3.0 | <2 | 3.4 | 2.9 | <2 | <2 | <2 |
| Na (ppm) | 3.3 | 3.4 | 4.2 | 3.5 | 4.2 | 5.2 | 3.7 | 4.1 | 3.9 |
| Mg (ppm) | 2.1 | 2.5 | 4.3 | 3.8 | 2.9 | 3.8 | 1.8 | 2.2 | 2.8 |
| Al (ppm) | 0.5 | 0.2 | 0.5 | 0.2 | 0.6 | 0.5 | 0.3 | 0.4 | 0.3 |
| Total of Na, Mg and Al (ppm) | 5.9 | 6.1 | 9.0 | 7.5 | 7.7 | 9.5 | 5.8 | 6.7 | 7.0 |
| 3 mm plate Yl | 2.1 | 2.0 | 2.1 | 2.3 | 2.5 | 3.0 | 2.2 | 2.4 | 2.3 |
| Nominal tensile strain (%) | 82 | 75 | 78 | 69 | 65 | 62 | 83 | 80 | 73 |

### [Example 10]

At 80°C under a nitrogen atmosphere, to a 10 L flask, 500 g of a pulverized product of PC (1) and 4.5 kg of methylene chloride were charged, and the resultant mixture was stirred for 30 minutes (step (1)). Subsequently, at 60°C, to the solution was added 5 g of activated carbon, the mixture was stirred for 30 minutes, to the solution was then added 5 g of iron (III) chloride as an agglomerating agent, the stirring was further continued for 60 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 2 shows the results.

### [Example 11]

At 80°C under a nitrogen atmosphere, to a 10 L flask, 500 g of a pulverized product of PC (1) and 4.5 kg of phenol were charged, and the resultant mixture was stirred for 30 minutes (step (1)). Subsequently, at 60°C, to the solution were added 5 g of activated carbon and 5 g of iron (II) sulfate as an agglomerating agent, the stirring was continued for 90 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 2 shows the results.

### [Example 12]

At 80°C under a nitrogen atmosphere, to a 10 L flask, 500 g of a pulverized product of PC (1) and 4.5 kg of a solvent obtained by mixing phenol and toluene at a mass ratio of 3:7 were charged, and the resultant mixture was stirred for 30 minutes (step (1)). Subsequently, at 60°C, to the solution were added 5 g of activated carbon and 5 g of iron (II) sulfate as an agglomerating agent, the stirring was continued for 90 minutes, and the solution was then filtered through a 0.5 µm glass filter to obtain a filtrate (step (2)). To the filtrate, 4.5 kg of acetone was added, then a white precipitate was generated (step (3)). The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 2 shows the results.

**[Table 2]**

| | Example 10 | Example 11 | Example 12 |
|---|---|---|---|
| Raw material | PC(1) | PC(1) | PC(1) |
| Agglomerating agent (1) | Iron (III) chloride | Iron (II) sulfate | Iron (II) sulfate |
| Amount of agglomerating agent (1) added with respect to raw material (% by mass) | 1 | 1 | 1 |
| Agglomerating agent (2) | - | - | - |
| Amount of agglomerating agent (2) added with respect to raw material (% by mass) | | - | - |
| Filter aid | Activated carbon | Activated carbon | Activated carbon |
| Amount of filter aid added with respect to raw material (% by mass) | 1 | 1 | 1 |
| Good solvent | Methylene chloride | Phenol | Phenol/toluene |
| Poor solvent | Acetone | Acetone | Acetone |
| L value | 98.5 | 96.5 | 98.4 |
| N (ppm) | <1 | <1 | <1 |
| P (ppm) | <2 | <2 | <2 |
| Na (ppm) | 4.8 | 5.2 | 4.6 |
| Mg (ppm) | 3.2 | 2.9 | 3.1 |
| Al (ppm) | 0.6 | 0.7 | 0.6 |
| Total of Na, Mg and Al (ppm) | 8.6 | 8.8 | 8.3 |
| 3 mm plate YI | 1.5 | 1.8 | 1.6 |
| Nominal tensile strain (%) | 89 | 84 | 83 |

### [Comparative Example 1]

At 20°C under a nitrogen atmosphere, to a 10 L flask, 500 g of a pulverized product of PC (1) and 4.5 kg of methylene chloride were charged, and the resultant mixture was stirred for 30 minutes. The solution was filtered through a glass filter, then the filter turned black, and a black filtrate was obtained. To the filtrate, 4.5 kg of acetone was added, then a precipitate was generated. The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 3 shows the results.

### [Comparative Example 2]

At 20°C under a nitrogen atmosphere, to a 10 L flask, 500 g of a pulverized product of PC (2) and 4.5 kg of methylene chloride were charged, and the resultant mixture was stirred for 30 minutes. The solution was filtered through a glass filter to obtain a filtrate. To the filtrate, 4.5 kg of acetone was added, then a precipitate was generated. The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 3 shows the results.

### [Comparative Example 3]

At 80°C under a nitrogen atmosphere, to a 10 L flask, 500 g of a pulverized product of PC (3) and 4.5 kg of phenol were charged, and the resultant mixture was stirred for 30 minutes. The solution was filtered through a glass filter, then the filter turned black, and a blackish filtrate was obtained. To the filtrate, 4.5 kg of acetone was added, then a precipitate was generated. The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 3 shows the results.

### [Comparative Example 4]

At 20°C under a nitrogen atmosphere, to a 10 L flask, 500 g of a pulverized product of PC (1) and 4.5 kg of methylene chloride were charged, and the resultant mixture was stirred for 30 minutes. Subsequently, at 60°C, to the solution was added 5 g of activated carbon, the mixture was stirred for 60 minutes, and the solution was filtered through a glass filter, then the filter turned black, and a filtrate was obtained. To the filtrate, 4.5 kg of acetone was added, then a precipitate was generated. The polycarbonate precipitate (recycled polycarbonate resin) was collected by filtration with a paper filter, and dried in a drier at 40°C for 10 hours to obtain powder of a recycled polycarbonate resin (step (4)).

With respect to the obtained recycled polycarbonate resin, evaluation was each performed by the procedures described above. Table 3 shows the results.

**[Table 3]**

| | Comparative Example 1 | Comparative Example 2 | Comparative Example 3 | Comparative Example 4 |
|---|---|---|---|---|
| Raw material | PC(1) | PC(2) | PC(3) | PC(1) |
| agglomerating agent (1) | - | - | - | - |
| Amount of agglomerating agent (1) added with respect to raw material (% by mass) | - | - | - | - |
| Agglomerating agent (2) | - | - | - | - |
| Amount of agglomerating agent (2) added with respect to raw material (% by mass) | - | - | - | - |
| Filter aid | - | - | - | Activated carbon |
| Amount of filter aid added with respect to raw material (% by mass) | - | - | - | 1 |
| Good solvent | Methylene chloride | Methylene chloride | Phenol | Methylene chloride |
| Poor solvent | Acetone | Acetone | Acetone | Acetone |
| L value | 43.2 | 85.2 | 78.2 | 84.5 |
| N (ppm) | <1 | 8 | <1 | <1 |
| P (ppm) | 1200 | 10 | 500 | 5 |
| Na (ppm) | 24 | 21 | 18 | 5.5 |
| Mg (ppm) | 10 | 8 | 12 | 2.9 |
| Al (ppm) | 5 | 3 | 8 | 1.0 |
| Total of Na, Mg and Al (ppm) | 39.0 | 32.0 | 38.0 | 9.4 |
| 3 mm plate YI | Unmeasurable | 15.8 | Unmeasurable | 5.2 |
| Nominal tensile strain (%) | 49 | 58 | 42 | 60 |

## Claims

1. A method for producing a recycled polycarbonate resin in which a recycled polycarbonate resin is produced from a polycarbonate resin waste raw material, the method comprising the following steps (S1) to (S4):
step (S1): preparing a polycarbonate resin solution by dissolving the polycarbonate resin waste raw material in a good solvent in which the polycarbonate resin waste raw material is soluble;
step (S2): bringing the polycarbonate resin solution into contact with an agglomerating agent, and subsequently removing undissolved substances to prepare a solution (L) free of undissolved substances;
step (S3): precipitating the recycled polycarbonate resin by mixing the solution (L) with a poor solvent; and
step (S4): recovering the precipitated recycled polycarbonate resin.

2. The method for producing a recycled polycarbonate resin according to claim 1, comprising, before removal of undissolved substances in step (S2), a step of bringing the polycarbonate resin solution into contact with a filter aid.

3. The method for producing a recycled polycarbonate resin according to claim 1 or 2, wherein the polycarbonate resin waste raw material contains 5% by mass or more in total of polycarbonate resin compositions corresponding to one or more selected from the group consisting of the following (i) to (iii), and the polycarbonate resin waste raw material contains 10% by mass or more of a polycarbonate resin:
(i) a polycarbonate resin composition which has a transmittance of 90% or less at 500 nm when the transmittance is measured using a 50 mm cell with respect to a solution obtained by dissolving the polycarbonate resin composition in methylene chloride to be 10% by mass;
(ii) a polycarbonate resin composition having a nitrogen atom content of 50 ppm by mass or more; and
(iii) a polycarbonate resin composition having a phosphorus atom content of 5 ppm by mass or more.

4. The method for producing a recycled polycarbonate resin according to claim 1 or 2, wherein the good solvent used in step (S1) contains a halogen-based solvent and/or a phenol-based solvent.

5. The method for producing a recycled polycarbonate resin according to claim 1 or 2, wherein the poor solvent used in step (S3) contains any one selected from the group consisting of a ketone-based solvent, a saturated hydrocarbon-based solvent, an alcohol-based solvent and water.

6. The method for producing a recycled polycarbonate resin according to claim 1 or 2, wherein the agglomerating agent in step (S2) is one or more selected from the group consisting of iron (III) chloride, iron (I) sulfate, iron (II) sulfate, aluminum chloride, aluminum sulfate, titanium oxide, copper (I) sulfate, copper (II) sulfate, copper (I) chloride, copper (II) chloride, zinc sulfate, an anionic polymer compound, a cationic polymer compound and a nonionic polymer compound.

7. The method for producing a recycled polycarbonate resin according to claim 6, wherein the agglomerating agent in step (S2) is one or more selected from the group consisting of iron (III) chloride, iron (II) sulfate, iron (III) sulfate, aluminum sulfate, aluminum chloride, polyacrylamide and polyethylene oxide.

8. The method for producing a recycled polycarbonate resin according to claim 2, wherein the filter aid is one or more selected from the group consisting of activated carbon, montmorillonite, celite, silica gel and a synthetic adsorbent.

9. The method for producing a recycled polycarbonate resin according to claim 1 or 2, wherein a total content of Na, Mg and Al in the recycled polycarbonate resin is 0.3 ppm by mass or more and 20 ppm by mass or less.

10. The method for producing a recycled polycarbonate resin according to claim 1 or 2, wherein an L value of the recycled polycarbonate resin is 80 or more as measured by reflectometry.

11. The method for producing a recycled polycarbonate resin according to claim 1 or 2, wherein a nominal tensile strain of the recycled polycarbonate resin is 60% or more.
